Europäisches Patentamt

European Patent Office

Office européen des brevets

(19)

(11) Numéro de publication: **0 251 201
B1**

(12) **FASCICULE DE BREVET EUROPEEN**

(45) Date de publication du fascicule du brevet:
08.08.90

(51) Int. Cl.⁵: **B61D 33/00**, B60N 2/00

(21) Numéro de dépôt: **87109123.7**

(22) Date de dépôt: **25.06.87**

(54) **Siège modulaire pour voiture ferroviaire.**

(30) Priorité: **27.06.86 FR 8609381**

(43) Date de publication de la demande:
**07.01.88 Bulletin 88/1**

(45) Mention de la délivrance du brevet:
**08.08.90 Bulletin 90/32**

(84) Etats contractants désignés:
**AT BE CH DE ES FR GB GR IT LI LU NL SE**

(56) Documents cités:
**EP-A- 0 122 245
DE-A- 1 803 825
FR-A- 1 322 683**

(73) Titulaire: **GEC ALSTHOM SA, 38, avenue Kléber,
F-75116 Paris(FR)**

(72) Inventeur: **Halliez, Gérard, 59 avenue Villars,
F-59300 Valenciennes(FR)**

(74) Mandataire: **Weinmiller, Jürgen et al,
Lennéstrasse 9 Postfach 24, D-8133 Feldafing(DE)**

ACTORUM AG

## Description

La présente invention concerne un siège pour voiture ferroviaire, comportant une structure portante, un élément d'assise et un élément de dossier, la structure portante étant constituée par un tube reliant deux barres horizontales servant de support à l'élément d'assise.

Les sièges de voitures ferroviaires sont soit des sièges individuels soit des banquettes à deux, trois voire quatre places. Les structures portantes et les éléments d'assise et de dossier sont donc différents, ce qui oblige à fabriquer et à gérer un stock important de structures et d'éléments.

De plus, le siège individuel est d'un prix de revient élevé et la banquette n'est pas très appréciée par les voyageurs.

On connaît, par le document FR-A 1 322 683, un siège comportant une structure portante munie d'un tube reliant deux barres horizontales, le siège étant posé sur les barres. Ce siège est monobloc car l'élément d'assise et l'élément de dossier ne sont pas séparés, ce qui interdit toute modularité de conception.

On connaît, par le document DE-A 1 803 825, un siège comportant un élément d'assise et un élément de dossier séparés, mais la liaison entre ces deux éléments est assurée par des ferrures qui interdisent également toute modularité de conception.

La présente invention a pour but d'obtenir des sièges individuels, seuls ou juxtaposés, à l'aide d'éléments d'assise et de dossier de conception modulaire, seule la forme de la structure portante étant adaptée au nombre de places choisi.

La présente invention a pour objet un siège pour voiture ferroviaire comportant une structure portante, un élément d'assise et un élément de dossier, la structure portante étant constituée par un tube reliant deux barres horizontales servant de support à l'élément d'assise, caractérisé en ce que l'élément d'assise et l'élément de dossier présentent chacun une gorge demi-circulaire, ces deux gorges étant chacune mise en place sur le tube.

Ce siège comporte en outre, l'une des caractéristiques suivantes:
- le tube de la structure portante est prolongé, au moins d'un côté du siège, pour constituer, avec deux autres barres, la structure portante d'un siège adjacent.
- les éléments d'assise et de dossier comportent chacun une coque et une garniture souple.
- l'élément de dossier comporte, dans sa partie supérieure, une autre gorge demi-circulaire mise en place contre une barre horizontale, cette barre servant de lien à un élément de dossier d'un autre siège, les deux sièges étant placés dos à dos.
- la barre horizontale est équipée d'une poignée de maintien.
- ce siège comporte deux accoudoirs reliés au tube de la structure par l'intermédiaire d'un collier et à chaque coque par l'intermédiaire de boulons.

Il est décrit ci-après, à titre d'exemple et en référence aux dessins annexés, un siège selon l'invention.

La figure 1 montre quatres sièges, deux sièges juxtaposés et assemblés dos à dos avec deux autres sièges juxtaposés.

La figure 2 montre en vue de dessus, la structure portante des quatres sièges de la figure 1.

La figure 3 montre une vue éclatée d'un siège.

La figure 4 montre un siège en coupe axiale, selon IV de la figure 3.

La figure 5 montre un détail de la figure 4.

La figure 6 montre le même siège en coupe axiale, selon VI de la figure 3.

La figure 7 montre un détail de fixation de ce siège en coupe axiale selon VII de la figure 3.

La figure 8 montre un accoudoir en coupe selon VIII de la figure 9.

La figure 9 montre le montage de l'accoudoir sur la structure portante, en coupe selon IX de la figure 8.

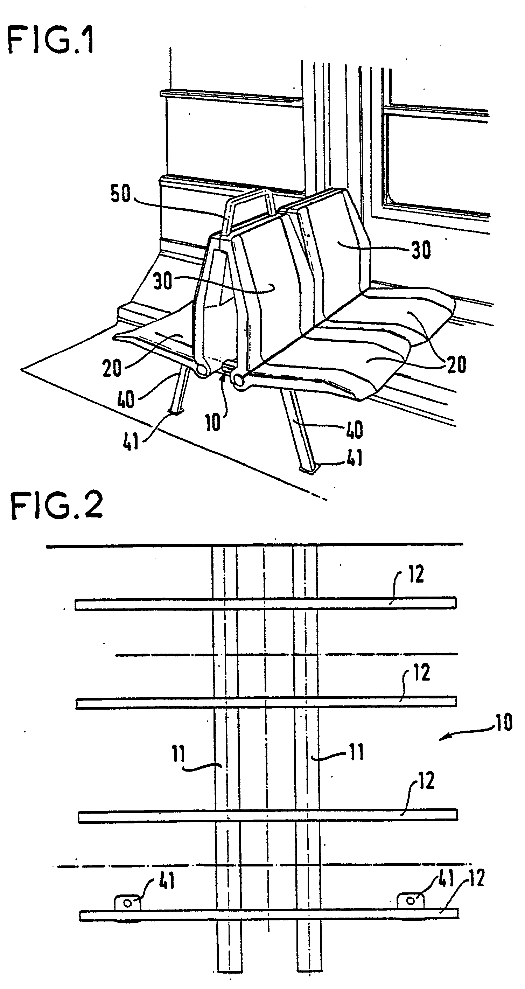

Dans la figure 1 sont représentés quatre sièges, deux par deux et dos à dos.

Ces quatres sièges comportent une structure portante unique 10, décrite en figure 2, quatre éléments d'assise 20, quatre éléments de dossiers 30, deux pieds 40 munis chacun d'une embase de fixation 41, et enfin une poignée de maintien 50. A l'opposé des pieds, les sièges sont fixés sur la face de la voiture.

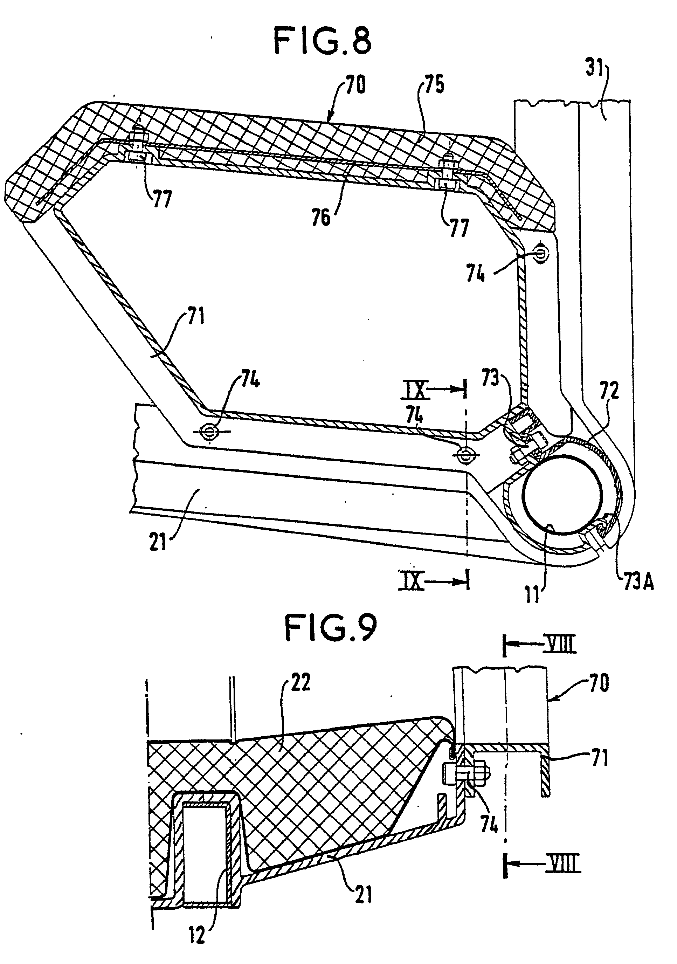

Bien entendu, toutes les combinaisons sont possibles ; le siège peut être un siège individuel, deux sièges ou trois sièges côte à côte voir quatre, avec ou sans accoudoirs (un accoudoir étant représenté en figure 8), appuyés contre une cloison ou dos à dos, avec ou sans poignée 50, et éventuellement des pieds intermédiaires dans le cas d'une banquette à au moins trois sièges.

Dans la figure 2, on voit, en vue de dessus, la composition de la structure portante : deux tubes horizontaux et parallélés 11, traversant quatre barres 12.

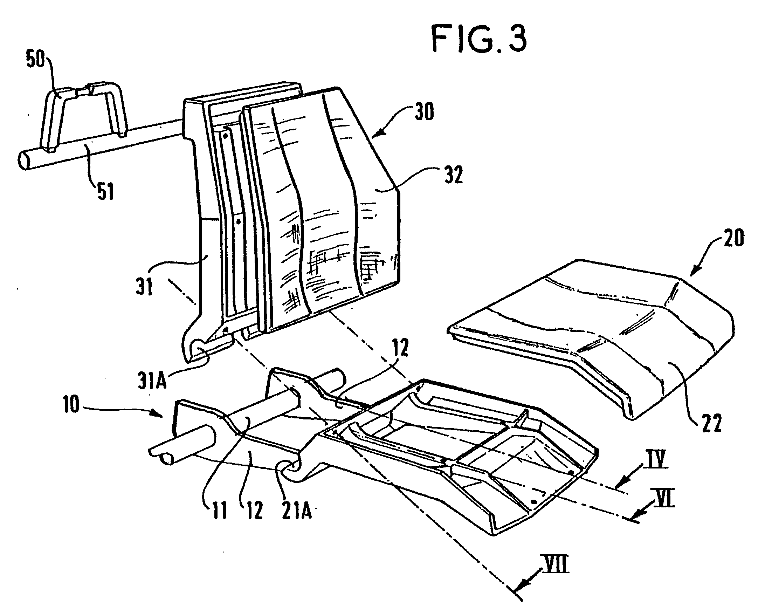

Bien entendu, la structure portante d'un siège individuel (figure 3) se compose d'un tube 11 dont la longueur est sensiblement égale à la largeur du siège et de deux demi-barres 12.

La barre 12 la plus proche de l'allée de la voiture, s'appuie sur deux pieds 40, chaque pied étant muni d'une embase 41 boulonnée sur le plancher de la voiture.

La figure 3 montre un siège, en vue éclatée, comportant un tube 11, deux barres 12, un élément d'assise 20 composé d'une coupe moulée 21 et d'une garniture souple 22, un élément de dossier 30 composé d'une coque moulée 31 et d'une garniture souple 32. La coque 31 de l'élément de dossier reçoit une barre horizontale 51 qui est équipée d'une poignée 50 quand le siège est situé le long d'une allée de circulation.

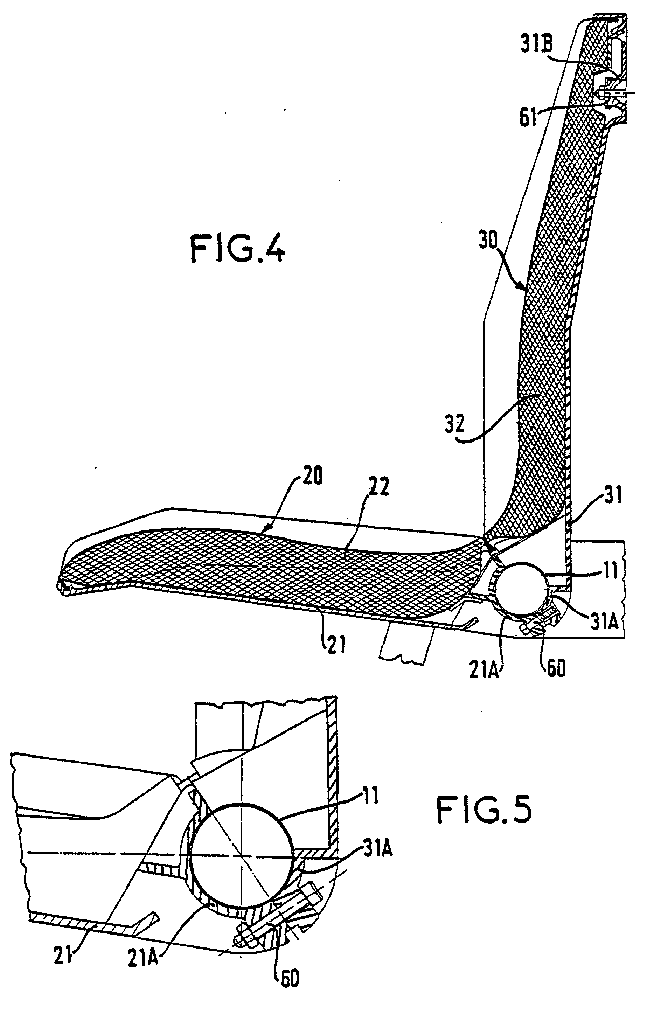

La figure 4 montre en coupe axiale, un tube 11, un élément d'assise 20 et un élément de dossier 30.

L'élément d'assise 20 se compose d'une coque moulée 21 comportant une gorge demi-circulaire 21A prenant appui sur le tube 11 et enfin d'une garniture souple 22.

L'élément de dossier 30 se compose d'une coque moulée 31 comportant une gorge demi-circulaire 31A prenant appui sur le tube 11.

Les deux coques 21, 31 sont maintenues sur le tube par l'intermédiaire d'un boulon 60, visible en figure 5.

Dans la partie supérieure de l'élément de dossier 30, une autre gorge demi-circulaire 31B permet la mise en place de la barre horizontale 51, le tout étant fixé par un boulon 61. Enfin l'élément de dossier 30 comporte une garniture souple 32.

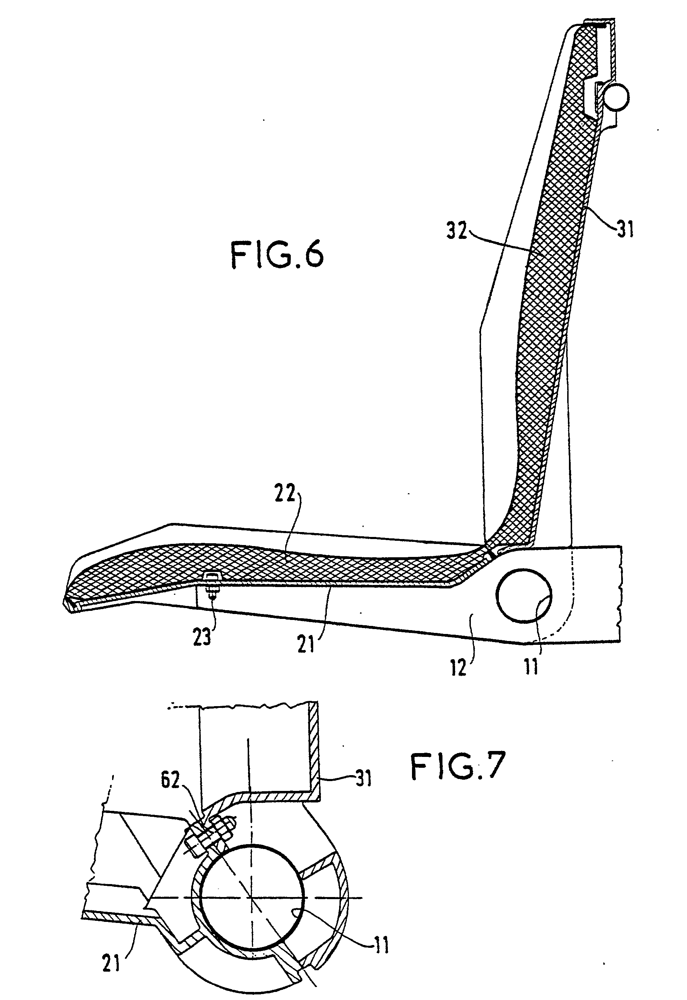

La figure 6 montre, en coupe axiale selon VI de la figure 3, la même barre 11, le même élément d'assise 20 et le même élément de dossier 30.

La coque 21 de l'élément d'assise 20 est fixée sur chaque barre 12 par l'intermédiaire d'un boulon 23.

La figure 7 montre la fixation latérale des deux coques 21, 31 sur le tube 11, par l'intermédiaire d'un boulon 62.

Les deux coques d'un siège sont alors fixées sur le tube par l'intermédiaire d'un boulon central 60 et de deux boulons latéraux 62.

La figure 8 montre un accoudoir selon la coupe VIII de la figure 9. Cet accoudoir 70 se compose d'une structure métallique 71 fixée à la coque 21 et à la coque 31 par l'intermédiaire de boulons 74. Cette structure 71 prend appui sur le tube 11 et elle est fixée à celui-ci par un collier 72 présentant un accrochage 73A et diamétralement opposé un boulon de maintien 73.

Cet accoudoir comporte également une garniture souple 75 munie d'un insert métallique 76 et fixée à la structure 71 par l'intermédiaire de deux boulons 77.

On voit, figure 9, la barre 12, la coque 21 qui s'engage sur la barre 12, la garniture souple 22 et la structure 71 de l'accoudoir 70.

Dans le cas de deux sièges juxtaposés, sans accoudoir, une entretoise d'une largeur quelconque est installée entre ces deux sièges et détermine ainsi leur écartement donc le confort des passagers.

## Revendications

1. Siège pour voiture ferroviaire, comportant une structure portante (10), un élément d'assise (20) et un élément de dossier (30), la structure portante (10) étant constituée par un tube (11) reliant deux barres horizontales (12) servant de support à l'élément d'assise, caractérisé en ce que l'élément d'assise (20) et l'élément de dossier (30) présentent chacun une gorge demi-circulaire (21A, 31A), ces deux gorges étant chacune mise en place sur le tube (11).

2. Siège selon la revendication 1, caractérisé en ce que le tube (11) de la structure portante est prolongé, au moins d'un côté du siège, pour constituer, avec deux autres barres, la structure portante d'un siège adjacent.

3. Siège selon l'une des revendications 1 ou 2, caractérisé en ce que les éléments d'assise (20) et de dossier (30) comportent chacun une coque (21, 31) et une garniture souple (22, 32).

4. Siège selon l'une des revendications précédentes, caractérisé en ce que l'élément de dossier comporte, dans sa partie supérieure, une gorge demi-circulaire (31B) mise en place contre une barre horizontale (51), cette barre (51) servant de lien à un élément de dossier d'un autre siège, les deux sièges étant placés dos à dos.

5. Siège selon la revendication 4, caractérisé en ce que la barre horizontale (51) est équipée d'une poignée de maintien (50).

6. Siège selon l'une des revendications précédentes, caractérisé en ce qu'il comporte deux accoudoirs (70) reliés au tube (11) de la structure par l'intermédiaire d'un collier (72) et à chaque coque (21, 31) par l'intermédiaire de boulons (74).

## Patentansprüche

1. Sitz für Eisenbahnwagen, mit einer Tragestruktur (10), einem Sitzelement (20) und einem Rückenelement (30), wobei die Tragestruktur (10) aus einem Rohr (11) besteht, das zwei waagrechte Stangen (12) miteinander verbindet, die dem Sitzelement als Unterlage dienen, dadurch gekennzeichnet, daß das Sitzelement (20) und das Rückenelement (30) jeweils eine halbkreisförmige Kehle (21A, 31A) aufweisen und beide Kehlen jeweils auf dem Rohr (11) sitzen.

2. Sitz nach Anspruch 1, dadurch gekennzeichnet, daß das Rohr (11) der Tragestruktur mindestens an einer Sitzseite verlängert ist und mit zwei weiteren Stangen die Tragestruktur des benachbarten Sitzes bildet.

3. Sitz nach einem der Ansprüche 1 oder 2, dadurch gekennzeichnet, daß das Sitzelement (20) und das Rückenelement (30) je eine Schale (21, 31) und eine nachgiebige Polsterung (22, 32) aufweisen.

4. Sitz nach einem der vorhergehenden Ansprüche, dadurch gekennzeichnet, daß das Rückenelement (30) in seinem oberen Teil eine halbkreisförmige Kehle (31B) aufweist, die an einer waagrechten Stange (51) anliegt, wobei die Stange (51) als Verbinder zu einem Rückenelement eines anderen Sitzes dient und die beiden Sitze Rücken an Rücken stehen. .

5. Sitz nach Anspruch 4, dadurch gekennzeichnet, daß die waagrechte Stange (51) mit einem Haltegriff (50) versehen ist.

6. Sitz nach einem der vorhergehenden Ansprüche, dadurch gekennzeichnet, daß er zwei Armlehnen (70) aufweist, die mit dem Rohr (11) der Struktur und durch eine Schelle (72) und mit jeder Schale (21, 31) durch Bolzen (74) verbunden sind.

## Claims

1. A railway carriage passenger seat, comprising a supporting structure (10) a seat member (20) and a backrest member (30), the supporting structure (10) being constituted by a tube (11) adapted to connect two horizontal bars (12) used to support the seat member, characterized in that the seat member (20) and the backrest member (30) each have a semicircular groove (21A, 31A) both grooves being placed on the tube (11).

2. A seat according to claim 1, characterized in that the tube (11) of a supporting structure is extended at least at one side of the seat to constitute together with two additional bars the supporting structure of an adjacent seat.

3. A seat according to claim 1 or 2, characterized in that the seat (20) and the backrest members (30) each comprise a shell (21, 31) and a resilient upholstery (22, 32).

4. A seat according to any one of the preceding claims, characterized in that the backrest member (30) comprises, in its upper part, a further semicircular groove (31B) placed against a horizontal bar (51), said bar (51) serving as a link to a back rest member of another seat, and both seats being placed back to back.

5. A seat according to claim 4, characterized in that the horizontal bar (51) is provided with a grasp handle (50).

6. A seat according to any one of the preceding claims, characterized in that it comprises two arm rests (70) connected to the tube (11) of the structure by a clamp (72), and to each shell (21, 31) by bolt means (74).

# FIG.1

50

30

30

20

20

40

10

40

41

41

# FIG.2

12

12

10

11

11

12

41

41

12

FIG.3

EP 0 251 201 B1

# FIG.4

# FIG.5

# FIG.6

# FIG.7

# FIG.8

# FIG.9